# FASCICULE DE BREVET EUROPEEN

(11) **EP 3 945 769 B1**
(45) Date de publication et mention de la délivrance du brevet: **13.03.2024**
(21) Numéro de dépôt: 21728900.8
(22) Date de dépôt: 26.05.2021
(51) Int. Cl.: A01D 34/00

(54) **ROBOT MOBILE ET MÉTHODE DE LIMITATION SPATIALE D'UN DÉPLACEMENT D'UN ROBOT MOBILE**
MOBILER ROBOTER UND VERFAHREN ZUR RÄUMLICHEN BEGRENZUNG EINER BEWEGUNG EINES MOBILEN ROBOTERS
MOBILE ROBOT AND METHOD FOR SPATIALLY LIMITING A MOVEMENT OF A MOBILE ROBOT

(30) Priorité: 28.05.2020 BE 202005376
(43) Date de publication de la demande: 09.02.2022
(73) Titulaire: Yamabiko Europe, 1300 Wavre (BE)
(72) Inventeur: COURTOIS, Pierre, 1050 Bruxelles (BE); PAQUES, Pierre, 5030 Gembloux (BE)
(74) Mandataire: Gevers Patents
(86) Numéro de dépôt international: PCT/EP2021/064096
(87) Numéro de publication internationale: WO 2021/239836

(56) Documents cités:
- EP-A1- 3 557 355
- WO-A1-96/38770
- CN-A- 103 891 463
- CN-A- 109 581 924
- US-A1- 2019 230 850

## Description

### Domaine technique

L'invention concerne un robot mobile, par exemple, une tondeuse robotisée, et une méthode pour limiter spatialement un déplacement d'un tel robot mobile.

### Art antérieur

Pour contrôler le déplacement d'une tondeuse robotisée dans une zone géographique, il est connu de munir celle-ci d'un système de navigation. La tondeuse se déplace alors dans une zone géographique déterminée, en tenant compte d'instructions reçues par le système de navigation et/ou de données de position reçues par un récepteur d'un système de positionnement par satellites. Généralement, un tel système de navigation est satisfaisant pour contrôler le déplacement de la tondeuse, et ce en toute sécurité. US 2019/230850 A1 décrit un robot mobile comprenant une unité d'entraînement moteur, un système de navigation couplé à l'unité d'entraînement moteur pour contrôler un déplacement du robot dans une zone géographique et un système de sécurité.

Dans certains cas, l'usage du système de navigation est combiné à celui d'une barrière bordant la zone géographique choisie et/ou une zone interdite, pour s'assurer que la tondeuse ne sorte pas de la zone géographique ou ne pénètre pas dans la zone interdite même en cas de défaillance du système de navigation. C'est par exemple le cas lorsque la zone géographique est une portion herbeuse jouxtant une piste d'aéroport, vu qu'il est crucial que la tondeuse ne se trouve à aucun moment sur la piste. De telles barrières connues sont constituées d'un fil électrique, éventuellement enterré, ou d'une clôture de piquets. Par exemple, le document WO 96/38770 A1 divulgue un procédé de navigation automatique d'une tondeuse dans une zone géographique délimitée par une telle barrière détectable par un capteur de proximité, et ce au moyen de données provenant d'un tel capteur de proximité et d'un organe de mesure du mouvement de la tondeuse, typiquement un odomètre.

Toutefois, dans le contexte d'une tondeuse opérant sur une portion herbeuse jouxtant une piste d'aéroport, l'installation d'une barrière doit intégrer les contraintes d'activités de cet aéroport. En particulier, la barrière doit être suffisamment résistante afin de pouvoir arrêter la tondeuse si celle-ci se dirige sans contrôle vers la piste, et ce sans pour autant empêcher le passage de véhicules aéroportuaires, ni causer de dommages ou immobiliser brutalement un avion qui quitterait accidentellement la piste. Une barrière constituée d'un simple fil électrique et/ou une clôture de piquets ne peuvent remplir toutes ces conditions avec un niveau de sécurité satisfaisant.

Pour répondre à ces contraintes, le document WO 2020/071917 A1 divulgue une barrière d'un corps souple et étanche, formant un récipient creux apte à être rempli ou vidé d'eau. La barrière ainsi remplie d'eau a une forme tubulaire suffisamment résistante. Lorsqu'elle est vide d'eau, le corps souple repose essentiellement à plat sur le sol et ne représente pas un obstacle. De cette façon, elle est facilement et rapidement modulable dans le sens où elle peut être remplie ou vidée selon les besoins pour s'adapter aux activités et/ou besoins de l'aéroport. Cette barrière est néanmoins coûteuse à mettre en place et à entretenir. Elle est également dégradable du fait de son usure, mais aussi par une potentielle action à distance d'un individu mal intentionné.

### Exposé de l'invention

Compte tenu de l'art antérieur, il apparaît nécessaire de fournir des moyens agissant comme une barrière pour contrôler et limiter le déplacement d'une tondeuse robotisée, ou plus généralement, d'un robot mobile, de façon moins coûteuse, et avec un niveau de sécurité plus élevé qu'une barrière selon l'art antérieur, en particulier, à proximité d'une piste d'aéroport, tout en tenant compte des contraintes d'activités de l'aéroport. Un objet de cette invention est de fournir de tels moyens.

À cet effet, la présente invention propose un robot mobile intégrant de tels moyens de nature virtuelle (ci-après, appelés plus simplement « barrière virtuelle ») au sein même du robot. Plus précisément, l'invention propose un robot mobile selon la revendication indépendante 1.

Les déplacements du robot selon la présente invention peuvent être contrôlés et limités de façon à la fois sûre et efficace grâce à l'avantageuse combinaison indépendante des systèmes de navigation et de sécurité. En effet, ceux-ci constituent des moyens indépendants de limitation du déplacement du robot dans la zone géographique. Il est en particulier possible de faire opérer le robot au voisinage d'une zone interdite sensible, telle qu'une piste d'aéroport, et ce en toute sécurité. L'implémentation du système de sécurité du robot est en outre globalement moins coûteuse que la mise en place et la maintenance de la barrière physique divulguée dans le document WO 2020/071917 A1.

L'invention se distingue de l'art antérieur en ce qu'elle propose des moyens pour limiter et contrôler les déplacements du robot ne comprenant pas de barrière physique, mais bien une forme de barrière virtuelle. En effet, le système de sécurité joue ce rôle de barrière virtuelle. Il constitue un deuxième moyen de contrôle et de limitation des déplacements du robot indépendant du système de navigation, tout comme le sont les barrières physiques selon l'art antérieur. Un avantage de l'invention réside dans le fait que cette barrière virtuelle engendre des coûts et des risques de dégradation moindres qu'une barrière physique, tout en permettant une pleine intégration des contraintes d'activités d'un aéroport. En particulier, cette barrière est assez résistante dans le sens où une unité d'immobilisation du robot est spécifiquement prévue pour immobiliser le robot, et ce de façon indépendante du contrôle du déplacement du robot par le système de navigation, et donc de façon prépondérante sur les instructions du système de navigation et sur les actions de l'unité d'entraînement moteur. Cette barrière virtuelle répond aux exigences propres aux contraintes d'activités d'un aéroport car elle ne représente pas un obstacle physique. Ainsi, elle n'empêche ni le passage de véhicules aéroportuaires ni celui d'un avion quittant accidentellement la piste. De plus, la barrière virtuelle est modulable dans le sens où elle peut être activée ou désactivée par contrôle des moyens d'immobilisation, de préférence de façon sécurisée et/ou par une commande d'accès physique. En outre, comme la barrière virtuelle est intégrée au robot, il n'est pas nécessaire de prévoir un rangement spécifique de celle-ci de façon indépendante du robot, pour permettre des activités telles que le déneigement d'une piste d'aéroport en période hivernale.

Dans le cadre de ce document, le terme « robot » fait référence à toute machine robotisée connue. Le robot est préférentiellement déjà existant dans la zone géographique. Il peut par exemple s'agir d'une tondeuse robotisée, d'un véhicule agricole robotisé, d'un tracteur robotisé de chariots à bagages, ... l'usage de tous ces robots étant répandus au sein des aéroports. Selon un mode de réalisation préféré de l'invention, le robot consiste en une tondeuse robotisée. La tondeuse est préférentiellement configurée pour tondre au moins une portion herbeuse dans la zone géographique, au voisinage direct d'une piste d'aéroport. De telles portions herbeuses sont nombreuses dans les aéroports et jouxtent généralement les pistes et/ou les taxiways d'aéroport, voire même recouvrent partiellement ou complètement les pistes dans de petits aéroports.

L'usage du robot selon l'invention dans et/ou autour d'un aéroport et/ou aux abords d'une piste d'aéroport est préféré de par le contexte même dans lequel est introduit l'invention. Cet usage et ce contexte ne sont toutefois pas limitatifs de la portée de l'invention. En particulier, l'invention s'étend à tout robot mobile apte à se déplacer dans une zone géographique dont il est souhaité de contrôler et/ou limiter le déplacement.

Dans le cadre de ce document, le terme de « zone géographique » est utilisé pour désigner une zone d'un terrain sur laquelle le robot est apte à se déplacer. Une telle zone comprend de préférence une portion (ou surface) herbeuse (ou encore parcelle d'herbe), en particulier, lorsque le robot consiste en une tondeuse robotisée. En outre, le terme de « zone » utilisé dans ce texte ne doit pas être interprété limitativement comme faisant référence à une zone d'un seul tenant. Par exemple, les zones dites d'opération et interdite ci-après introduites sont parfaitement susceptibles de comprendre plusieurs sous-zones d'un seul tenant. Lorsque la zone géographique comprend et/ou est délimitée par une barrière physique (tel que connu par exemple de l'art antérieur), le contrôle des moyens d'immobilisation est préférentiellement indépendant de la barrière physique. Plus préférentiellement, le contrôle du déplacement du robot par le système de navigation est aussi indépendant de la barrière physique. En ce sens, l'implémentation de l'invention ne nécessite pas de barrière physique.

Dans le cadre de ce document, les termes « coupler », « couplage » et leurs dérivés font préférentiellement référence à des couplages électriques et/ou électromécaniques qui permettent une transmission d'informations et/ou d'instructions au sein des composantes du robot. Par exemple, un couplage, de préférence électrique, entre l'unité d'entraînement moteur et le système de navigation permet au système de navigation d'envoyer des instructions de déplacement du robot dans la zone géographique, celles-ci correspondant au contrôle du déplacement du robot déterminé par le système de navigation. En particulier, le terme « couplé » (et ses dérivés) peut généralement être substitué à « apte à communiquer avec » dans le cadre du présent document.

Dans le cadre du présent document, les termes « sur base de » données, « en fonction de » données, ou encore « à partir de » données, ne doivent pas être interprétés de façon restrictive comme correspondant au fait que seules les données citées peuvent être prises en compte. Par exemple, le contrôle des moyens d'immobilisation est effectué sur base des deuxièmes données de position, sans que cela limite ces données aux seuls paramètres pris en compte pour contrôler les moyens d'immobilisation. Par exemple, comme introduit ci-après dans le document, des corrections de ces données de position sont aussi préférentiellement prises en compte.

Le contrôle des moyens d'immobilisation consiste de préférence en une activation (optionnellement totale et/ou partielle, et/ou permanente et/ou temporaire) et/ou une désactivation de ces moyens d'immobilisation.

Dans le cadre de ce document, une « activation » d'un élément du robot apte à produire un effet technique correspond préférentiellement à sa mise en fonctionnement de façon à produire cet effet technique. De la même façon, une « désactivation » de l'élément technique correspond de préférence en une mise en arrêt de cet élément technique, de sorte qu'il ne produit plus cet effet technique. Les verbes « activer » et « désactiver » et leurs dérivés ont de façon préférée des significations respectives correspondantes. Par exemple, lorsque les moyens d'immobilisation sont activés, ils permettent d'immobiliser le robot indépendamment du contrôle du déplacement du robot exercé par le système de navigation. À l'inverse, lorsqu'ils sont désactivés, ils ne produisent pas cet effet technique.

L'usage, dans le présent document, du verbe « comprendre », de ses variantes, ainsi que ses conjugaisons, ne peut en aucune façon exclure la présence d'éléments autres que ceux mentionnés. L'usage, dans le présent document, de l'article indéfini « un », « une », ou de l'article défini « le », « la » ou « l' », pour introduire un élément n'exclut pas la présence d'une pluralité de ces éléments. Les termes « premier », « deuxième », « troisième », etc. sont, quant à eux, utilisés dans le cadre de ce document pour différencier au moins formellement des éléments, et ce sans impliquer d'ordre entre ces éléments.

Selon un mode de réalisation préféré de la présente invention, le robot comprend une source d'énergie de l'unité d'entraînement moteur (qui alimente donc cette dernière), et les moyens d'immobilisation comprennent (et de préférence, consistent en) un commutateur de cette source d'énergie pour activer et/ou désactiver celle-ci sur base des deuxièmes données de position. Un tel commutateur est de préférence couplé électriquement au deuxième récepteur et à la source d'énergie.

Ce mode de réalisation permet une mise en oeuvre aisée et peu coûteuse des moyens d'immobilisation du robot. En effet, tel que connu d'un homme du métier, le commutateur correspond à une commande « on/off » de la source d'énergie. Une activation des moyens d'immobilisation correspond alors à une simple désactivation de la source d'énergie au moyen du commutateur (la position « off »), entraînant une immobilisation immédiate et efficace de l'unité d'entraînement moteur, et ce quelles que soient les instructions que cette unité reçoit du système de navigation. En particulier, cette désactivation de la source d'énergie engendre préférentiellement une rupture d'alimentation en énergie des éventuelles roues de propulsion du robot. Vu que le système de navigation n'agit pas sur cette source d'énergie, il ne lui est pas possible de réactiver la source d'énergie et le robot reste immobilisé. De préférence, le robot comprend en outre des freins automatiques empêchant un déplacement dû au moment d'inertie, à l'énergie cinétique du robot et/ou à sa position sur un terrain en pente lorsque l'unité d'entraînement moteur et/ou la source d'énergie sont désactivés. Les moyens d'immobilisation comprennent optionnellement également des freins additionnels du robot.

En d'autres termes, conformément à l'enseignement de ce mode de réalisation, l'invention propose aussi un robot mobile comprenant :
- une unité d'entraînement moteur ;
- une source d'énergie de l'unité d'entraînement moteur ;
- un système de navigation couplé à l'unité d'entraînement moteur pour contrôler un déplacement du robot dans une zone géographique ; et
- un système de sécurité (indépendant du système de navigation) :
   - comprenant un deuxième récepteur pour recevoir des deuxièmes données de position du robot,
   - couplé à la source d'énergie pour activer et/ou désactiver cette dernière sur base des deuxièmes données de position.

Il est explicité sur quelle base préférée le déplacement du robot est contrôlé par le système de navigation. Préférentiellement, ce dernier comprend :
- un premier récepteur pour recevoir des premières données de position du robot, le contrôle du déplacement du robot se faisant (au moins) sur base des premières données de position ; et/ou
- une commande de contrôle à distance pour recevoir des instructions de contrôle de déplacement du robot d'un opérateur, le contrôle du déplacement du robot se faisant (au moins) sur base de ces instructions.
Dans ce cas, de façon avantageuse, le premier récepteur permet un contrôle automatique du déplacement du robot dans la zone géographique, en fonction de la position en temps réel du robot, alors que la commande de contrôle à distance permet un contrôle manuel du déplacement du robot, en fonction d'instructions d'un opérateur externe, envoyée, par exemple, au moyen d'une télécommande, via un réseau sans fil. Dans le cadre de la présente invention, les intégrations d'un premier récepteur et/ou d'une commande de contrôle de déplacement sont parfaitement envisageables séparément (dans le cas d'un contrôle uniquement automatique du déplacement du robot ou d'un contrôle uniquement manuel du déplacement du robot) ou bien en combinaison (par exemple, dans le cas d'un contrôle principalement autonome du déplacement du robot par le système de navigation comprenant le premier récepteur, sur lequel il serait possible d'influer occasionnellement, en cas de besoin, par un envoi d'instructions au moyen de la commande de contrôle à distance). De préférence, le robot mobile est (essentiellement) autonome. De préférence, le contrôle du déplacement du robot se fait (de façon essentiellement autonome) selon des premières données de position reçues d'un tel premier récepteur du système de navigation.

Les premier et deuxième récepteurs susdits sont préférentiellement distincts et non connectés directement de sorte que les premières et deuxièmes données de position sont susceptibles de différer. En ce sens, les premier et deuxième récepteurs sont indépendants, bien qu'ils puissent, par exemple, tous les deux reposer sur des éléments techniques communs (par exemple, sans s'y limiter, un même réseau de satellites) pour recevoir leurs données de position respectives. En particulier, l'indépendance des premier et deuxième récepteurs est telle qu'il n'existe de préférence pas d'échange de données entre eux. De même, plus généralement et préférentiellement, le robot est configuré de telle façon qu'il n'existe pas d'échange de données entre les systèmes de navigation et de sécurité, ce qui consacre leur indépendance. En outre, le terme « données de position » utilisé ci-dessus, dans ce document, ne doit pas être interprété comme référant de façon limitative à des strictes coordonnées spatiales, mais s'étend à d'autres données relatives à la position du robot. En particulier, les premier et/ou deuxième récepteur peuvent faire partie intégrante d'au moins un système de positionnement de proximité (par exemple, par caméra, lidar, radar, et/ou sonar) et/ou de type temps vol (par exemple, par satellites, wifi et/ou bande ultra large). Dans ce deuxième cas, les premier et/ou deuxième récepteurs sont des « récepteurs temps de vol » et reçoivent régulièrement ou en permanence des données de position passivement tel qu'il est connu d'un homme du métier. L'usage de premier et/ou deuxième récepteurs temps de vol est préféré de par leur fiabilité et leur précision dans le cadre de l'invention.

Des modes de réalisations plus préférés sont introduits ci-dessous pour les premiers et deuxièmes récepteurs. En particulier, ces récepteurs sont de préférence des récepteurs GNSS (pour « *Géolocalisation et Navigation par un Système de Satellites* »), c'est-à-dire des récepteurs de signaux d'un système de positionnement par satellites. De tels systèmes connus sont, par exemple, GPS, GLONASS, Beidou et Galileo. Dans ce cas, les premières et deuxièmes données de position reçues par ces récepteurs sont préférentiellement des coordonnées GNSS.

Selon un mode de réalisation préféré de l'invention, au moins un des premier et deuxième récepteurs est un récepteur GNSS RTK, c'est-à-dire, un récepteur GNSS par cinématique temps réel. Un système GNSS RTK est connu d'un homme du métier et comprend, outre le système GNSS classique, un récepteur fixe, appelé « base » ou « station de référence » dont la position est connue précisément et qui permet de comparer les données de position reçues du système GNSS avec cette position connue, de façon à en déduire des corrections en temps réels (dites RTK) des données de position et ainsi d'accroître la précision de celles-ci. Cette base permet aussi un envoi de ces corrections RTK vers un récepteur GNSS mobile (un de ceux du robot dans le cas de la présente invention), de façon à ce que ce dernier en tienne compte. Cet envoi est de préférence effectué par un réseau de communication sans fil, par exemple, par wifi, 4G et/ou 5G. Dans le cas d'un système GNSS RTK, le récepteur mobile est communément appelé « rover ».

Dans le cas de cette invention, les premier et deuxième récepteurs sont préférentiellement des revers associés à des bases distinctes de façon à ce que les premières et deuxièmes données de position corrigées au moyen de leurs corrections RTK respectives soient indépendantes. Cependant, il ne peut être exclus du cadre de l'invention que ces deux bases correspondent à une même base (et ne soient dès lors pas distinctes), l'implémentation pratique de l'invention en étant alors avantageusement simplifiée. Dans tous les cas, et de préférence, les bases sont prévues sur un site proche de la zone géographique et/ou dans celle-ci, de façon à ce que les corrections RTK obtenues soient les plus proches possibles des erreurs réelles des données de position reçues par les revers. Les bases en tant que telles ne font pas partie du robot de l'invention, laquelle prévoit néanmoins un kit comprenant le robot et les bases.

En bref, en reprenant les termes de l'invention, le premier récepteur est de préférence un récepteur mobile d'un premier système de positionnement par satellites (GNSS) par cinématique temps réel (RTK) :
- configuré pour recevoir (d'une première base RTK) des premières corrections RTK relatives aux premières données de position, et
- programmé pour déterminer des premières données corrigées de position à partir des premières corrections et des premières données de position,
le système de navigation étant programmé pour contrôler le déplacement du robot dans la zone géographique sur base des premières données corrigées.

De la même façon, le deuxième récepteur est préférentiellement un récepteur mobile d'un deuxième système de positionnement par satellites (GNSS) par cinématique temps réel (RTK) :
- configuré pour recevoir (d'une deuxième base RTK) des deuxièmes corrections RTK relatives aux deuxièmes données de position, et
- programmé pour déterminer des deuxièmes données corrigées de position à partir des deuxièmes corrections et des deuxièmes données de position,
le système de sécurité étant programmé pour contrôler les moyens d'immobilisation du robot sur base des deuxièmes données corrigées.

Il est à noter que les termes de premier et deuxième système de positionnement par satellites par cinématique temps réel font de préférence référence à un usage de deux bases RTK (les première et deuxième bases) distinctes, et d'un système de satellites commun. Deux systèmes de satellites distincts sont optionnellement utilisés. Comme il a été mentionné ci-dessus, le cas optionnel où les première et deuxième base RTK seraient identiques, et/ou le cas où et les satellites des premier et deuxième systèmes de positionnement par satellites seraient les mêmes, ne peuvent être exclus du cadre de l'invention, seuls les premier et deuxième récepteurs étant nécessairement distincts.

Il est avantageux d'utiliser des récepteurs GNSS RTK dans le cas de la présente invention car ceux-ci permettent d'atteindre des précisions de données de position élevées, de l'ordre de quelques centimètres (au pire 10 centimètres, et dans des conditions idéales de l'ordre de 1 à 2 centimètres). L'usage de tels récepteurs répond ainsi pleinement au besoin de contrôler très précisément le déplacement du robot dans une zone géographique, ou en dehors.

Selon un sous-mode de réalisation du mode de réalisation préféré pour lequel au moins le deuxième récepteur est un récepteur GNSS RTK, les deuxièmes corrections sont chiffrées de bout en bout. Diverses techniques de chiffrement (notamment symétrique ou asymétrique) connues d'un homme du métier peuvent être utilisées à cet effet sans se départir du cadre de l'invention.

De préférence, une clé (publique) de déchiffrement des deuxièmes corrections est enregistrée sur un support de données du système de sécurité, celui-ci étant connecté au deuxième récepteur pour lui transmettre des données (et donc permettre un usage de la clé (publique) de déchiffrement au sein du deuxième récepteur). Dans ce cas, le deuxième récepteur est préférentiellement programmé pour déchiffrer les deuxièmes corrections au moyen de cette clé (publique) de déchiffrement, de façon à déterminer des corrections déchiffrées. Les deuxièmes données de position corrigées sont alors déterminées de façon effective par le deuxième récepteur à partir de ces corrections déchiffrées et des deuxièmes données de position.

Ce sous-mode de réalisation permet un niveau de sécurité encore plus élevé du système de sécurité car le chiffrement des deuxièmes corrections au moyen d'une clé (privée) de chiffrement correspondante permet de s'assurer qu'elles sont bien originaires de la (deuxième) base RTK associée et qu'elles n'ont pas été générées, ou interceptées et corrompues par des individus mal intentionnés. Les clés (publique) de déchiffrement et (privée) de chiffrement sont préférentiellement aptes à être générées sur site, auprès de la deuxième base RTK, par exemple, lors de l'installation du robot selon l'invention.

Optionnellement, suivant le mode de réalisation préféré pour lequel le système de navigation comprend un premier récepteur GNSS RTK, les premières corrections sont (également) chiffrées de bout en bout. Ceci permet d'augmenter le degré de sécurité du contrôle de déplacement du robot. En particulier, optionnellement, l'enseignement des trois paragraphes précédents s'applique de façon semblable au niveau du système de navigation pour les premières connections.

Pour garantir une flexibilité d'utilisation, le système de navigation est généralement un système ouvert par accès à distance sécurisé. Par contraste, et pour garantir un niveau de sécurité élevé, le système de sécurité est de préférence un système fermé, et au moins partiellement chiffré (comme il est détaillé ci-dessus par exemple), et accessible uniquement sur site. En d'autres termes, l'invention propose de préférence un robot comprenant deux systèmes de géolocalisation, dont l'un ouvert et l'autre fermé. Les modes de réalisations préférés de l'invention associés aux caractères respectivement ouvert et fermé des systèmes de navigation et de sécurité sont exposés ci-dessous dans le cas où ils comprennent respectivement des premier et deuxième récepteurs GNSS RTK tels qu'introduits ci-dessus.

Selon un mode de réalisation préféré du système de navigation, celui-ci comprend un premier support de données connecté au premier récepteur (de façon à permettre une transmission de données), des premiers paramètres de contrôle de déplacement du robot étant enregistrés sur le premier support de données et comprenant une définition de la zone géographique. Dans ce cas, le premier récepteur est préférentiellement programmé pour déterminer des premières données de comparaison entre les premières données corrigées et des premiers paramètres définissant la zone géographique, et le système de navigation est préférentiellement programmé pour contrôler le déplacement du robot dans la zone géographique sur base des premières données de comparaison, au moyen d'un couplage électrique et/ou électromécanique avec l'unité d'entraînement moteur.

Les premières données de comparaison permettent essentiellement de savoir quelle position le robot occupe par rapport à la zone géographique, selon les premières données corrigées. En d'autres termes, elles permettent de savoir en temps réel si le robot est dans la zone géographique ou en dehors de celle-ci. Dans ce premier cas, le système de navigation continue d'envoyer des instructions à l'unité d'entraînement moteur, contrôlant ainsi le déplacement du robot de façon à ce qu'il reste dans la zone géographique. Dans le deuxième cas, le robot étant sorti de la zone géographique (du moins selon les premières données corrigées), le système de navigation envoie une instruction d'arrêt à l'unité d'entraînement moteur pour que celle-ci ne génère plus de déplacement du robot.

Le système de navigation comprend de préférence une commande d'accès à distance pour modifier les premiers paramètres. Cette commande d'accès à distance prévoit préférentiellement une connexion sans fil sécurisée, par exemple par protocole SSH, avec une interface d'utilisateur. Un utilisateur habilité peut ainsi modifier les premiers paramètres, et par conséquent la zone géographique sur laquelle se déplace le robot.

Selon un mode de réalisation préféré du système de sécurité, il comprend un deuxième support de données connecté au deuxième récepteur (de façon à permettre une transmission de données), et des deuxièmes paramètres de contrôle de position du robot sont enregistrés sur le deuxième support de données. Dans ce cas, le deuxième récepteur est de préférence programmé pour déterminer des données de comparaison entre les deuxièmes données corrigées et des deuxièmes paramètres, et le système de sécurité est de préférence programmé pour contrôler les moyens d'immobilisation du robot sur base des données de comparaison. Ces deuxièmes paramètres peuvent être de différentes natures (par exemple, spatiale, temporelle, météorologique).

Lesdits deuxièmes paramètres comprennent préférentiellement une définition d'(au moins) une zone interdite pour le robot. Lesdites données de comparaison comprennent alors de préférence des troisièmes données de comparaison entre les deuxièmes données corrigées et des deuxièmes paramètres définissant la zone interdite. De façon particulièrement avantageuse, ces troisième données de comparaison permettent essentiellement de savoir quelle position le robot occupe par rapport à la zone interdite, selon les deuxièmes données corrigées. En d'autres termes, elles permettent de savoir en temps réel si le robot est en dehors de la zone interdite ou s'il a pénétré celle-ci. Dans ce premier cas, le système de sécurité conserve les moyens d'immobilisation comme désactivés par défaut. Dans le deuxième cas, le robot étant entré dans la zone interdite (du moins selon les deuxièmes données corrigées), le système de sécurité active les moyens d'immobilisation pour immobiliser immédiatement le robot, quel que soit le contrôle du déplacement du robot ayant été décidé par le système de navigation. Il est à noter que cette situation ne se présente que si le premier récepteur, les premières données de position et/ou première données corrigées sont défectueuses, car le système de navigation a déjà pour objectif de confiner le robot dans la zone géographique et prévient donc normalement toute sortie de celle-ci. Le système de sécurité permet donc de s'assurer avec un niveau de sécurité très élevé que le robot n'entre pas dans une zone interdite hautement sensible, telle qu'une piste d'aéroport.

Lesdits deuxièmes paramètres comprennent préférentiellement une définition d'(au moins) une zone d'opération du robot comprenant au moins la zone géographique (et a fortiori disjointe de la zone interdite si une définition d'une telle zone est également définie par des deuxièmes paramètres tel qu'exposé dans le paragraphe précédent). Une telle zone d'opération est ainsi une zone géographique d'étendue maximale sur laquelle il est prévu que le robot opère. Les données de comparaison comprennent alors de préférence des deuxièmes données de comparaison entre, d'une part, les deuxièmes données corrigées, et d'autre part, des deuxièmes paramètres définissant la zone d'opération. De façon particulièrement avantageuse, ces deuxièmes données de comparaison permettent notamment de savoir quelle position le robot occupe par rapport à la zone d'opération, selon les deuxièmes données corrigées. En d'autres termes, elles permettent de savoir en temps réel si le robot est toujours positionné dans la zone d'opération ou s'il est en dehors de celle-ci. Dans ce premier cas, le système de sécurité conserve les moyens d'immobilisation comme désactivés par défaut. Dans le deuxième cas, le robot étant sorti de la zone d'opération (du moins selon les deuxièmes données corrigées), le système de sécurité active optionnellement les moyens d'immobilisation pour immobiliser préventivement le robot de façon à éviter qu'il ne pénètre dans la zone interdite et/ou qu'il ne s'éloigne davantage de la zone d'opération. Cette activation est davantage optionnelle en ce qu'il est possible, lorsque le robot quitte la zone d'opération, de prévoir d'autres actions intermédiaires telles qu'une activation d'alarme, et/ou une activation seulement partielle et/ou temporaire des moyens d'immobilisation. En effet, une fois que les moyens d'immobilisation sont pleinement activés, il n'est de préférence plus possible d'interagir avec le robot à distance. Celui-ci doit alors être récupéré sur site. Il est donc avantageux de limiter l'activation pleine et entière des moyens d'immobilisation à une situation d'urgence, c'est-à-dire, quand, malgré toutes les mesures de sécurité prises, le robot pénètre dans la zone interdite.

De préférence, le système de sécurité comprend une commande d'accès physique pour modifier les deuxièmes paramètres, ceux-ci n'étant modifiables qu'au moyen de cette commande d'accès physique (et donc sur site). Cette seule commande d'accès physique accroît encore le niveau de sécurité du système de sécurité. Il est en particulier ainsi rendu impossible toute corruption des deuxièmes paramètres à distance, par exemple à des fins terroristes pour détourner le robot vers la zone interdite. La modification des deuxièmes paramètres se fait préférentiellement par cette commande d'accès physique, au moyen d'une clé physique à plusieurs niveaux d'accès. Un niveau d'accès permet de modifier les deuxièmes paramètres et d'effectuer des mises à jour, tout en imposant une désactivation d'une source d'énergie de l'unité d'entraînement moteur. Un autre niveau d'accès permet d'effectuer un test du robot sans modifier les paramètres pour une durée limitée et en dehors de la zone interdite.

De façon générale, aucun accès à distance n'est préférentiellement possible au niveau du système de sécurité, que ce soit au niveau hardware ou software, par exemple sur des données enregistrées telles qu'une clé (publique) de déchiffrement, ou sur n'importe quel autre paramètre de sécurité. Des mises à jour du système de sécurité et des modifications des deuxièmes paramètres sont de préférence implémentées par un opérateur certifié ayant un accès sur site au robot, au moyen de la clé physique susdite. De préférence, chaque telle mise à jour ou modification est précédée d'un enregistrement des deuxièmes paramètres (et de la clé (publique) de déchiffrement lorsqu'il y en a une) sur une mémoire du système de sécurité, et suivie d'un envoi d'une notification sur une interface d'utilisateur.

Dès lors, selon la combinaison des modes de réalisations susdits, comme il est plus aisé de modifier les premiers paramètres que les deuxièmes paramètres, il est avantageux de définir une zone d'opération comprenant une collection de zones géographiques sur lesquelles le robot est susceptible d'opérer pour pouvoir modifier facilement, à distance, la zone d'opération au moyen des premiers paramètres, sans devoir accéder de façon physique et sécurisée au robot. Optionnellement, il peut toutefois être prévu que les zones géographiques et d'opération coïncident.

Pour tenir compte de contraintes extérieures typiquement régulière dans la zone d'opération du robot, il peut être prévu que celle-ci et/ou la zone interdite varient en fonction du temps, et soient par exemple associées à une fenêtre horaire. Plus précisément et préférentiellement, les deuxièmes données corrigées comprennent une composante de temps, et les deuxièmes paramètres définissant les zones d'opération et/ou interdite (selon les modes de réalisation considérés) dépendent de cette composante de temps. Les deuxièmes données de position et les deuxièmes données corrigées sont alors de préférence des données de position dans l'espace-temps.

Dans le cadre du présent document, « une donnée de position dans l'espace-temps » comprend à la fois une composante d'espace, c'est-à-dire une donnée de position spatiale, et une composante de temps, c'est-à-dire une donnée de position temporelle. Comme le terme « position » l'indique de façon classique, une « donnée de position » comprend au moins une composante d'espace (correspondant, dans le cas de l'invention à une position du robot dans l'espace), mais elle comprend aussi préférentiellement une composante de temps. Comme les deuxièmes paramètres définissant les zones d'opération et/ou interdite dépendent d'une composante de temps des deuxièmes données corrigées, la définition de ces zones et, par conséquent, les deuxièmes et troisièmes données de comparaison dépendent aussi du temps. En particulier, de cette manière, il est possible de faire varier ces zones selon un horaire, ce qui est avantageux au sein d'un aéroport pour que le contrôle et la limitation des déplacements du robot soient adaptés aux activités prévues au sein de l'aéroport. Par exemple, des portions de terrain constituant des épaulements de piste peuvent être définies comme faisant partie de la zone interdite (définissant par exemple, une sous-zone de celle-ci d'un seul tenant) pendant les heures de décollages et d'atterrissages de l'aéroport, mais comme faisant partie de la zone d'opération en dehors de ces heures.

La zone géographique, et/ou les zones d'opération et/ou interdite susdites sont préférentiellement définies respectivement par les premiers et deuxièmes paramètres au moyen de cartes de géorepérage (par géo-fencing), dont chacune comprend une pluralité de points de position reliés entre eux, de façon à former un polygone.

Le système de sécurité comprend de préférence une alarme apte à émettre un signal d'alerte, et il est programmé pour activer et/ou désactiver l'alarme sur base :
- des (en particulier, deuxièmes et troisièmes) données de comparaison ;
- d'une absence et/ou d'une insuffisance de réception de deuxièmes données de position et/ou de deuxièmes corrections par le deuxième récepteur.
Lorsque le système de navigation comprend un premier récepteur GNSS RTK tel que décrit précédemment, le système de sécurité est en outre de préférence programmé pour activer et/ou désactiver l'alarme sur base d'une incohérence (significative) entre les premières et deuxièmes données corrigées.

Cette alarme permet de prévenir un observateur extérieur et/ou un utilisateur d'une position anormale du robot, et/ou d'une perte et/ou insuffisance des signaux reçus par le deuxième récepteur, et/ou d'un disfonctionnement du premier ou deuxième récepteur. Les signaux susdits comprennent à la fois des signaux reçus du système de satellites et comprenant les deuxièmes données de position, ainsi que les signaux issus de la (deuxième) base RTK et comprenant les deuxièmes corrections. L'alarme est préférentiellement activée en cas de perte et/ou insuffisance de réception de ces signaux, mais aussi lorsque les deuxièmes données de comparaison indiquent une sortie du robot de la zone d'opération, et/ou lorsque les troisièmes données de comparaison indiquent une entrée du robot dans la zone interdite. En cas de perte et/ou insuffisance de réception des signaux, un arrêt temporaire de fonctionnement de l'unité d'entrainement moteur est de préférence programmé jusqu'à ce que ces signaux soient à nouveau pleinement reçus. Le signal d'alerte est de préférence envoyé sur une interface sécurisée d'un utilisateur du robot. Optionnellement, plusieurs signaux d'alerte sont émis, dont un comprend une onde sonore et/ou lumineuse émise à partir d'une source d'onde du robot.

Bien que le robot de l'invention soit présenté selon plusieurs modes de réalisation préférés introduits ci-dessus comme comprenant un système de navigation comprenant un premier récepteur de données de position sur base desquelles le déplacement du robot est contrôlé, d'autres agencements de ce premier récepteur sont également possibles dans le cadre de l'invention. Par exemple, selon un mode de réalisation particulier de l'invention, le système de sécurité comprend un (tel) premier récepteur afin de recevoir des premières données de position du robot et le système de navigation est, quant à lui, couplé à ce premier récepteur pour contrôler le déplacement du robot dans la zone géographique sur base de ces premières données de position. Comme il sera compris d'un homme du métier, tous les modes de réalisations qui précédent s'étendent sans peine à de telles autres agencements du premier récepteur.

Selon un mode de réalisation de l'invention, le robot comprend une unité de test comprenant des moyens électroniques programmés pour générer une activation périodique autonome des moyens d'immobilisation pendant un laps de temps (prédéterminé). Ce laps de temps est de l'ordre préféré d'une seconde. L'activation périodique autonome est de préférence générée environ toutes les deux heures. Optionnellement, l'unité de test génère également une activation des moyens d'immobilisation pendant un tel laps de temps lors d'une mise en fonction du robot et/ou lors du chargement d'une source d'énergie (par exemple, une batterie) de l'unité d'entraînement moteur (et/ou, de façon plus générale, du robot).

Avantageusement, l'unité de test permet d'accroître encore une fois le niveau de sécurité du fonctionnement du robot et du système de sécurité en testant que les moyens d'immobilisation sont bien aptes à être activés à tout instant. Un disfonctionnement éventuel des moyens d'immobilisation peut être rapidement détecté grâce à l'unité de test. De préférence, une alarme (par exemple, l'alarme susmentionnée du système de sécurité s'il en comprend, ou une autre alarme indépendante de celle-ci et intégrée à l'unité de test) est configurée pour émettre un signal d'alerte lorsque les moyens d'immobilisation n'ont pas été activé par suite d'une activation périodique autonome. De préférence, dans ce cas, l'unité de test est couplée à l'unité d'entraînement moteur pour commander un arrêt de cette dernière.

L'unité de test inclut de préférence un chien de garde programmé pour contrôler l'activation périodique autonome des moyens d'immobilisation. Un chien de garde (dans les domaines informatiques) est connu d'un homme du métier et comprend un dispositif électronique et/ou logiciel pour contrôler qu'une action déterminée, en l'occurrence l'activation périodique autonome des moyens d'immobilisation, a bien été exécutée. Le chien de garde permet donc de vérifier que l'activation périodique autonome est bien commandée par l'unité de test, améliorant une fois de plus le niveau de sécurité élevé du système de navigation. De préférence, le chien de garde est directement couplé de façon électrique et/ou électronique aux moyens d'immobilisation pour activer ceux-ci en cas de détection d'échec de l'unité de test à activer les moyens d'immobilisation. De préférence, le chien de garde permet plus généralement de vérifier l'intégrité globale des moyens d'immobilisation.

Un objet de l'invention est également de fournir une méthode de limitation spatiale d'un déplacement d'un robot mobile comprenant :
- une unité d'entraînement moteur,
- un système de navigation couplé à l'unité d'entraînement moteur pour contrôler un déplacement du robot dans une zone géographique ;
permettant à la fois de contrôler et de limiter son déplacement de façon moins coûteuse, et avec un niveau de sécurité plus élevé, que par une telle méthode consistant à fournir et à utiliser une barrière selon l'art antérieur.

À cet effet, l'invention propose une méthode de limitation spatiale d'un déplacement d'un tel robot mobile, comprenant les étapes de :
(i) fournir et munir le robot d'un système de sécurité comprenant :
   - un deuxième récepteur pour recevoir des deuxièmes données de position du robot,
   - des moyens d'immobilisation du robot aptes à immobiliser le robot indépendamment du contrôle du déplacement du robot par le système de navigation,
      et couplés au deuxième récepteur pour être contrôlés sur base des deuxièmes données de position ;
(ii) recevoir des deuxièmes données de position au moyen du deuxièmes récepteur ;
(iii) contrôler le déplacement du robot dans la zone géographique au moyen du système de navigation ;
(iv) contrôler les moyens d'immobilisation du robot sur base des deuxièmes données de position reçues par le deuxième récepteur.

Tous les avantages du robot mobile selon la présente invention se transposent mutatis mutandis à la présente méthode de limitation spatiale. Cette méthode permet donc de contrôler et de limiter le déplacement du robot de façon peu coûteuse, et avec un niveau de sécurité très élevé.

De façon générale, tous les modes de réalisation du robot selon l'invention et leurs avantages se transpose mutatis mutandis à la présente méthode de limitation spatiale. En particulier, ces modes de réalisation, de par la configuration et les capacités fonctionnelles des composants du robot décrits ci-dessus s'étendent et se traduisent directement comme des étapes ou sous-étapes de la méthode selon l'invention.

Par exemple, et préférentiellement selon un tel mode de réalisation, la méthode consiste en une méthode pour limiter, dans la zone géographique et en dehors d'une zone interdite, le déplacement du robot mobile, celui-ci étant tel que le système de navigation comprend un premier récepteur mobile d'un premier système de positionnement par satellites (GNSS) par cinématique temps réel (RTK) :
- configuré pour recevoir des premières données de position du robot et des premières corrections RTK relatives à ces premières données de position, et
- programmé pour déterminer des premières données corrigées de position à partir des premières corrections et des premières données de position,
le système de navigation étant programmé pour contrôler le déplacement du robot dans la zone géographique (à l'étape (iii)) sur base des premières données corrigées. Dans ce cas, la méthode est telle que :
- le deuxième récepteur du système de sécurité fourni à l'étape (i) est un récepteur mobile d'un deuxième système de positionnement par satellites (GNSS) par cinématique temps réel (RTK) :
   - configuré pour recevoir des deuxièmes corrections RTK relatives aux deuxièmes données de position, et
   - programmé pour déterminer des deuxièmes données corrigées de position à partir des deuxièmes corrections et des deuxièmes données de position ;
- l'étape (ii) comprend les sous-étapes :
   - recevoir les premières données de position,
   - recevoir les premières corrections, et
   - déterminer les premières données corrigées,
      au moyen du premier récepteur ;
   - recevoir les deuxièmes corrections, et
   - déterminer les deuxièmes données corrigées,
   au moyen du deuxième récepteur ;
- l'étape (iii) comprend la sous-étape de requérir un arrêt du déplacement du robot via l'unité d'entraînement moteur lorsqu'une parmi les premières données corrigées correspond à une sortie du robot en dehors de la zone géographique ;
- l'étape (iv) comprend la sous-étape de requérir une immobilisation du robot au moyen des moyens d'immobilisation lorsqu'une parmi les deuxièmes données corrigées correspond à une entrée du robot dans la zone interdite.

De préférence, la méthode est appliquée pour un déplacement du robot à proximité d'une piste d'aéroport. La méthode permet avantageusement de prendre pleinement en compte les contraintes d'activité de l'aéroport. De façon générale, l'invention propose (sans s'y limiter) une utilisation d'un robot selon l'invention au voisinage (direct) d'une piste d'aéroport.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre une vue schématique aérienne d'une zone géographique au sein de laquelle se déplace un robot mobile selon un mode de réalisation préféré de l'invention ;
- la figure 2 illustre un organigramme d'une méthode de limitation spatiale d'un déplacement d'un robot mobile selon un mode de réalisation préféré de l'invention.

Les dessins des figures ne sont pas à l'échelle. Généralement, des éléments semblables sont dénotés par des références semblables dans les figures. Dans le cadre de ce document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

Cette partie du texte introduit une description détaillée de modes de réalisation préférés de la présente invention. Cette description fait référence à des figures mais l'invention n'est pas limitée par celles-ci. Les dessins et figures décrits ci-dessous sont schématiques et non limitants. En outre, la description présente, sans perte de généralité, le mode de réalisation préféré de l'invention où le robot mobile est une tondeuse robotisée autonome. Par abus de notation, cette tondeuse sera également désignée par la référence 1.

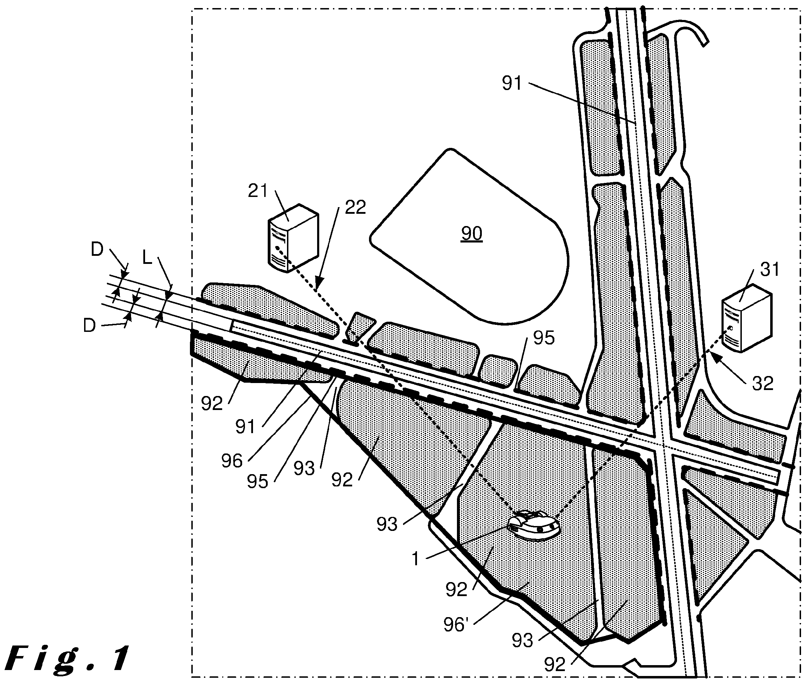

La figure 1 illustre une vue aérienne d'un aéroport comprenant un bâtiment principal 90, deux pistes 91 et des portions herbeuses grisées dont les portions 92 séparées par des chemins 93 auxiliaires divers (comprenant par exemple des taxiways, et/ou voies de circulation de véhicules aéroportuaires). Les portions 92 jouxtent au moins une piste 91. Il est prévu une tondeuse 1 robotisée autonome configurée pour se déplacer dans une zone d'opération 96 comprenant plusieurs portions 92 et des parties de chemins 93 entre ces portions. La tondeuse 1 est programmée pour tondre de façon autonome de l'herbe sur les portions 92.

D'autres telles tondeuses opèrent préférentiellement semblablement dans des zones d'opération similaires et disjointes (et/ou optionnellement dans la même zone d'opération 96). Les modes de réalisation préférés de l'invention sont détaillés ci-dessous pour la tondeuse 1 mais s'appliquent préférentiellement de la même façon à toute telle tondeuse opérant au voisinage direct des pistes 91, sans que la représentation des figures soient limitatives.

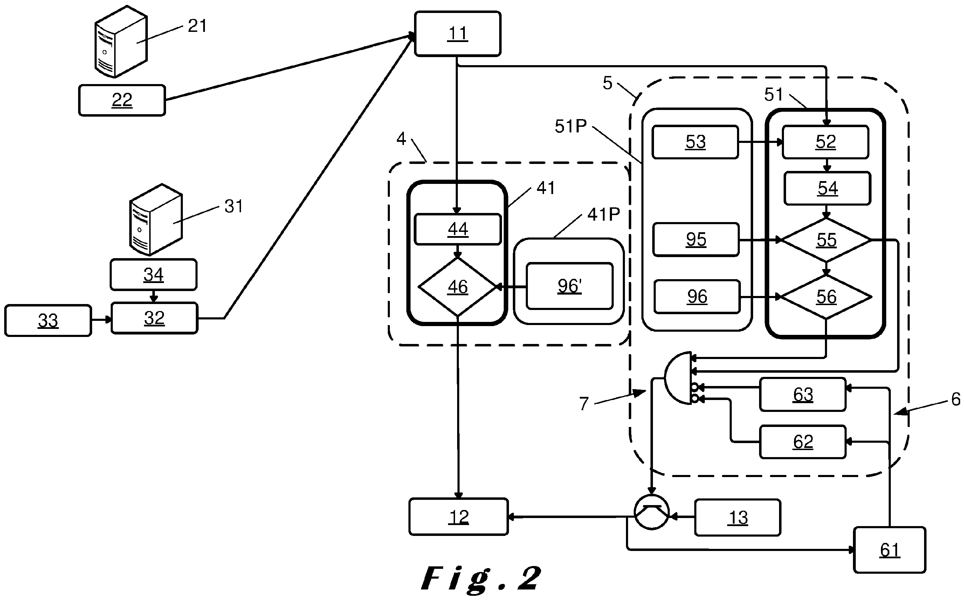

Comme il apparaît schématiquement sur la figure 2, la tondeuse 1 comprend une unité d'entraînement moteur 12 comprenant divers couplages électromécaniques et des roues de propulsion tel que connu d'un homme du métier. La tondeuse comprend également une source d'énergie 13 pour cette unité d'entraînement moteur 12, comprenant par exemple une batterie d'alimentation de la tondeuse 1 en électricité. La tondeuse 1 comprend aussi un système de navigation 4 couplé à l'unité d'entraînement moteur 12 pour contrôler un déplacement de la tondeuse dans une zone géographique 96' correspondant, par exemple, à une seule portion 92 de la zone d'opération 96.

Le système de navigation 4 comprend un premier récepteur 41 GNSS RTK pour recevoir des premières données de position de la tondeuse 1, et des premières corrections 22 RTK relatives aux premières données de position via un récepteur 11 de la tondeuse 1. Ces premières corrections 22 sont émises par une première base 21 RTK associée dont la position sur le site de l'aéroport est connue de façon précise. Le premier récepteur 41 est apte à déterminer des premières données corrigées 44 de position à partir des premières corrections 22 et des premières données de position.

Ces premières données corrigées 44 sont alors comparées à des premiers paramètres 41P définissant la zone géographique 96' qui sont enregistrés au sein du système de navigation 4. Cette étape se traduit par des premières données de comparaison 46. Le système de navigation 4 est ainsi apte à déterminer précisément la position de la tondeuse 1, vérifier qu'elle est dans la zone géographique 96' et contrôler le déplacement de la tondeuse 1 de sorte qu'elle reste dans la zone géographique 96'. Si les premières données corrigées 44 indiquent une position spatiale de la tondeuse correspondante hors de la zone géographique 96', le système de navigation 4 est programmé pour requérir un arrêt immédiat de la tondeuse 1 par l'intermédiaire de l'unité d'entraînement moteur. Les premiers paramètres 41P sont modifiables par un utilisateur extérieur au moyen d'une connexion sécurisée à distance. De cette façon, il est possible de modifier la zone géographique 96' dans la zone d'opération 96 pour requérir une tonte sur une autre portion 92.

Le système de navigation 4 de la tondeuse 1 est en lui-même très sécurisé et permet d'éviter que la tondeuse 1 ne soit perdue ou détournée par des individus mal intentionnés. Cependant, au vu la situation particulière de la zone d'opération 96, à proximité immédiate des pistes 91, la tondeuse 1 selon l'invention comprend une duplication du système de navigation 4, mais cette fois comme un système fermé à un utilisateur extérieur, indépendant du système de navigation 4 original. Cette duplication constitue un système dit de sécurité 5 qui n'a pas vocation à guider la tondeuse 1 mais bien à contrôler la source d'énergie 13 en l'activant ou en la désactivant, sur base de la position de la tondeuse 1 qu'il évalue indépendamment de l'évaluation de la position de la tondeuse 1 faite par le premier récepteur 41 du système de navigation. Ce système de sécurité 5 agit donc essentiellement en cas de disfonctionnement ou de piratage du système de navigation 4 ou de l'unité d'entraînement moteur 12, et ce de façon à garantir avec quasi-certitude que la tondeuse 1 ne peut pas entrer dans une zone interdite 95 critique constituée par les pistes 91 et une bordure immédiate des pistes 91. Une telle zone interdite est notamment illustrée en figure 1 et comprend les pistes 91 sur toute leur largueur L, ainsi qu'une bordure immédiate des pistes 91, d'une largueur D, de chaque côté des pistes 91. Par exemple, cette largueur D est comprise entre 5 et 20 mètres, et vaut de préférence environ 7,5 mètres. Elle varie préférentiellement en fonction d'un horaire prédéfini qui dépend de l'activité au sein de l'aéroport.

Le système de sécurité 5 est maintenant introduit de façon plus précise. Comme mentionné ci-dessus, il couplé à la source d'énergie 13, plus précisément par un couplage électrique et un commutateur formant des moyens d'immobilisation 7 de la tondeuse 1. Le système de sécurité 5 est donc apte à commander une désactivation de la source d'énergie 13 correspondant à une position « off » du commutateur, et un frein automatique des roues de propulsion de la tondeuse 1 de façon à l'immobiliser. Le système de navigation 4 et l'unité d'entraînement moteur 12 ne peuvent pas contrer une telle commande qui est prépondérante sur tout le fonctionnement de la tondeuse 1.

Pour ce faire, le système de sécurité 5 comprend un deuxième récepteur 51 GNSS RTK pour recevoir des deuxièmes données de position de la tondeuse 1, ainsi que des deuxièmes corrections 32 RTK relatives aux deuxièmes données de position via le récepteur 11 de la tondeuse 1. Pour augmenter le niveau de sécurité du système de sécurité 5, les deuxièmes corrections 32 sont chiffrées de bout en bout et émises par une deuxième base 31 RTK associée, qui est distincte de la première base 21 RTK, et dont la position sur le site de l'aéroport est connue de façon précise. La deuxième base 31 est programmée pour déterminer des corrections RTK non chiffrées 34 et pour chiffrer celles-ci au moyen d'une clé privée de chiffrement 33 enregistrée au sein d'un hardware de la deuxième base 31, de façon à obtenir les deuxièmes corrections 32 RTK chiffrées. Ce sont ces dernières qui sont transmises au deuxième récepteur 51. Ce dernier est alors apte à déchiffrer les deuxièmes corrections 32 au moyen d'une clé publique de déchiffrement 53 enregistrée au sein d'un hardware du deuxième récepteur 51, pour déterminer des corrections déchiffrées 52. Celles-ci sont ensuite combinées aux deuxièmes données de position reçues par le deuxième récepteur 51 pour déterminer des deuxième données corrigées 54 de position.

Ces deuxièmes données corrigées 54 sont alors comparées à des deuxièmes paramètres 51P définissant les zones d'opération 96 et interdite 95 qui sont enregistrés au sein du système de sécurité 5. De cette façon, le système de sécurité 5 est apte à déterminer précisément la position de la tondeuse 1, de façon sécurisée et complètement indépendamment du système de navigation 4, et à vérifier qu'elle est dans la zone d'opération 96 et/ou en dehors de la zone interdite 95. Cette étape se traduit au travers de deuxièmes et troisièmes données de comparaison, 56 et 55 respectivement, entre ces zones 96, 95, et la position correspondante aux deuxième données corrigées 54. Le système de sécurité 5 est programmé pour désactiver de façon immédiate et totale la source d'énergie 13 par les moyens d'immobilisation, dès qu'une deuxième donnée corrigée 54 correspond à une position spatiale de la tondeuse 1 dans la zone interdite 95. Une deuxième donnée corrigée 54 correspondant à une position spatiale de la tondeuse 1 en dehors de la zone d'opération 96 mène de préférence à une émission d'un signal d'alerte par une alarme du système de sécurité 5. Les deuxièmes paramètres 51P sont incorruptibles à distance par un utilisateur extérieur. Seule une connexion sécurisée sur site au moyen d'une clé physique d'accés permet de modifier les deuxièmes paramètres ou d'effectuer des mises à jour logicielle du système de sécurité 5.

De préférence, la tondeuse 1 comprend une unité de test 6 munie de moyens électroniques 61, 63 programmés pour désactiver périodiquement et automatiquement la source d'énergie 13 pendant un court laps de temps, d'environ une seconde, de façon à vérifier le bon fonctionnement des moyens d'immobilisation 7. Ces moyens électroniques 61, 63 comprennent un module de contrôle 61 et un module d'exécution 63 couplés électriquement et munis d'une pluralité de circuits électroniques. Le module de contrôle 61 est configuré pour transmettre périodiquement des instructions de désactivation de la source d'énergie 13 au module d'exécution 63. Le module de contrôle 61 est aussi couplé électriquement à un chien de garde 62 programmé pour contrôler la bonne exécution des instructions de désactivation de la source d'énergie 13 par le module d'exécution 63. De cette façon, le niveau de sécurité offert par le système de sécurité 5 en est renforcé.

En résumé, l'invention concerne un robot 1 mobile comprenant, d'une part, un système de navigation 4 couplé à une unité d'entraînement moteur 12 du robot 1 pour contrôler un déplacement du robot 1, et d'autre part, un système de sécurité 5 indépendant du système de navigation 4 et comprenant un récepteur 51 de données de position couplé à des moyens d'immobilisation 7 du robot 1 pour immobiliser le robot 1 de façon prépondérante sur l'unité d'entraînement moteur 12, dans certains cas, par exemple, si le robot 1 pénètre dans une zone interdite 95. L'invention concerne également une méthode de limitation spatiale d'un déplacement du robot 1.

## Revendications

1. Robot (1) mobile comprenant :
- **une unité d'entraînement moteur (12) ;**
- un **système** de navigation (4) **couplé à l'unité d'entraînement moteur (12) pour contrôler un déplacement du robot (1) dans une zone géographique (96') ;**
**caractérisé en ce qu'il comprend en outre :**
- **un système de sécurité (5)** comprenant :
• **un deuxième récepteur (51) pour recevoir des deuxièmes données** de position du robot (1),
• des moyens **d'immobilisation** (7) du robot (1) aptes **à immobiliser le robot (1) indépendamment du contrôle du déplacement du robot (1) par le système de navigation (4),**
et **couplés au deuxième récepteur (51) pour être contrôlés** sur base **des deuxièmes données de position.**

2. Robot (1) **selon la revendication précédente,**
**comprenant une source d'énergie (13) de l'unité d'entraînement moteur (12),** et **caractérisé en ce que les moyens d**'immobilisation (7) comprennent un commutateur **de la source d'énergie (13) pour activer et/ou désactiver celle-**ci sur base **des deuxièmes données de position.**

3. **Robot (1) selon l'une quelconque des revendications précédentes,**
**caractérisé en ce que le système de navigation (4)** comprend un premier **récepteur (41) pour recevoir des premières données de position du robot (1), le contrôle du déplacement du robot (1) se faisant sur base des premières données de position.**

4. Robot (1) selon la revendication 1 ou 2,
dans lequel le **système de sécurité (5) comprend un premier récepteur (41) pour recevoir des premières données de position du robot (1), et**
**dans lequel le système de navigation (4) est couplé au premier récepteur** (41) **pour contrôler le déplacement du robot (1)** dans la zone **géographique (96') sur base des premières données de position.**

5. Robot (1) selon la revendication 3 ou 4, dans lequel les premier (41) et **deuxième (51) récepteurs sont indépendants, de sorte que les premières** et **deuxièmes données de position sont susceptibles de différer.**

6. Robot (1) selon la revendication 3 ou selon la revendication 5 **lorsqu'elle dépend de la revendication 3,**
**caractérisé en ce que le premier récepteur (41) est un récepteur mobile d'un premier système de positionnement par satellites (GNSS) par cinématique temps réel (RTK) :**
• **configuré pour recevoir des premières corrections (22) RTK relatives aux premières données de position, et**
• **programmé pour déterminer des premières données corrigées (44)** de **position à partir des premières corrections (22) et des premières données de position,**
le **système de navigation (4) étant programmé pour contrôler le déplacement** du robot (1) **dans la zone géographique (96')** sur base des **premières données corrigées (44).**

7. Robot (1) selon la **revendication précédente, caractérisé en ce que :**
- **le système de navigation (4) comprend un premier support de données connecté au premier récepteur (41) ;**
- **des premiers paramètres (41 P) de contrôle de déplacement du robot (1) sont enregistrés sur le premier support de données ;**
- **les premiers paramètres (41P) comprennent une définition de la zone géographique (96') ;**
- **le premier récepteur (41) est programmé pour déterminer des premières données de comparaison (46) entre, d'une part, les premières données corrigées (44), et d'autre part, des premiers paramètres (41 P) définissant la zone géographique (96') ; et**
- **le système de navigation (4) est programmé pour contrôler le déplacement du robot (1) dans la zone géographique (96')** sur base des **premières données de comparaison (46), au moyen d'un couplage électrique et/ou électromécanique avec l'unité d'entraînement moteur** (12).

8. **Robot (1) selon l'une quelconque des revendications précédentes,**
**caractérisé en ce que le deuxième récepteur (51) est un récepteur mobile d'un deuxième système de positionnement** par satellites (GNSS) par **cinématique temps réel (RTK) :**
• **configuré pour recevoir des deuxièmes corrections (32) RTK relatives aux deuxièmes données de position, et**
• **programmé pour déterminer des deuxièmes données corrigées (54) de position à partir des deuxièmes corrections (32) et des deuxièmes données de position,**
le **système de sécurité (5) étant programmé pour contrôler** les moyens **d'immobilisation (7)** du robot (1) **sur base des deuxièmes données corrigées** (54).

9. **Robot (1) selon la revendication précédente, caractérisé en ce que :**
- **les deuxièmes corrections (32) sont chiffrées** de bout en bout ;
- **une clé de déchiffrement** (53) **des deuxièmes corrections (32) est enregistrée sur un support de données du système de sécurité (5), celui-ci étant connecté au deuxième récepteur (51) pour lui transmettre des données ; et**
- **le deuxième récepteur (51) est programmé pour déchiffrer les deuxièmes corrections (32) au moyen de cette clé de déchiffrement (53) de façon à déterminer des corrections déchiffrées (52),**
les **deuxièmes données de position corrigées (54) étant déterminées de façon effective par le deuxième récepteur (51) à partir de ces** corrections **déchiffrées (52) et des deuxièmes données de position.**

10. **Robot (1) selon l'une quelconque des** revendications 8 ou 9, **caractérisé en ce que :**
- **le système de sécurité (5) comprend un deuxième support de données connecté au deuxième récepteur (51) ;**
- **des deuxièmes paramètres (51P) de contrôle de position du robot** (1) sont **enregistrés sur le deuxième support de données** ;
- le **deuxième récepteur (51) est programmé pour déterminer des données** de comparaison (55, 56) entre les deuxièmes **données corrigées (54) et des deuxièmes paramètres (51P) ;** et
- le **système de sécurité (5) est programmé** pour **contrôler** les moyens **d'immobilisation (7) du robot (1)** sur base des **données de comparaison** (55, 56).

11. Robot (1) selon **la revendication précédente, caractérisé en ce que** :
- **les deuxièmes paramètres (51P) comprennent une définition d'une zone d'opération (96) du robot (1) comprenant au moins la zone géographique (96'), et** lesdites **données de comparaison** (55, 56) comprennent des **deuxièmes données de comparaison (56) entre les deuxièmes données corrigées (54) et des deuxièmes paramètres (51P) qui définissent** la zone **d'opération (96) ;** et/ou
- **les deuxièmes paramètres (51P) comprennent une définition d'une zone** interdite (95) pour le robot (1), et lesdites **données de comparaison** (55, 56) comprennent **des troisièmes données de comparaison (55) entre les deuxièmes données corrigées (54) et des deuxièmes paramètres** (51P) **qui définissent** la zone interdite (95) ;
et **en ce que** :
- les **deuxièmes données corrigées (54)** comprennent une composante de temps ; et
- les **deuxièmes paramètres (51P) définissant les zones d'opération (96)** et/ou **interdite (95) dépendent** de cette composante de temps.

12. Robot (1) selon la revendication 10 ou 11, **caractérisé en ce que le système de sécurité (5) comprend une commande d'accès physique pour modifier les deuxièmes paramètres (51P), ceux-ci n'étant modifiables qu'au moyen** de **cette commande d'accès physique.**

13. **Robot (1) selon l'une quelconque des revendications précédentes, caractérisé en ce qu'il consiste en une tondeuse robotisée.**

14. **Utilisation d'un robot (1) mobile selon l'une quelconque des revendications précédentes au voisinage d'une piste d'aéroport.**

15. **Méthode de limitation spatiale d'un déplacement**
**d'un robot (1)** mobile comprenant :
- **une unité d'entraînement moteur (12),**
- **un système de navigation (4) couplé à l'unité d'entraînement moteur (12) pour contrôler un déplacement du robot (1) dans une zone géographique (96') ;**
**la méthode comprenant les étapes de :**
(i) fournir et munir le robot (1) **d'un système de sécurité (5)** comprenant :
• **un deuxième récepteur (51) pour recevoir des deuxièmes données** de position du robot (1),
• **des moyens d'immobilisation (7) du robot (1) aptes à immobiliser le robot (1) indépendamment du contrôle du déplacement du robot (1) par le système de navigation (4),**
et **couplés au deuxième récepteur (51) pour être contrôlés sur base des deuxièmes données de position ;**
(ii) **recevoir des deuxièmes données de position au moyen du deuxième récepteur (51) ;**
(iii) **contrôler le déplacement du robot (1) dans la zone géographique (96') au moyen du système de navigation (4) ;**
(iv) **contrôler les moyens d'immobilisation (7) du robot (1) sur base des deuxièmes données de position reçues par le deuxième récepteur** (51).

16. **Méthode selon la revendication précédente, pour limiter, dans ladite zone géographique (96') et en dehors d'une zone interdite (95), le déplacement du robot (1) mobile, ce dernier étant tel que :**
**le système de navigation (4) comprend un premier récepteur (41) mobile d'un premier système de positionnement par** satellites (GNSS) par **cinématique temps réel (RTK) :**
• **configuré pour recevoir des premières données de position du robot** (1) et **des premières corrections (22) RTK relatives aux premières données de position, et**
• **programmé pour déterminer des premières données corrigées (44) de position à partir des premières corrections (22) et des premières données de position,**
**le système de navigation (4) étant programmé pour contrôler le déplacement du robot (1) dans la zone géographique (96') sur base des premières données corrigées (44) ;**
**la méthode étant caractérisé en ce que :**
- **le deuxième récepteur (51) du système de sécurité (5) fourni à l'étape (i) est un récepteur mobile d'un deuxième système de positionnement par** satellites (GNSS) **par cinématique temps réel (RTK) :**
• **configuré pour recevoir des deuxièmes corrections (32) RTK relatives aux deuxièmes données de position, et**
• **programmé pour déterminer des deuxièmes données corrigées (54) de position à partir des deuxièmes corrections (32) et des deuxièmes données de position ;**
- **l'étape (ii) comprend les sous-étapes :**
• recevoir les **premières données de position,**
• recevoir les **premières corrections (22), et**
• **déterminer les premières données corrigées (44),**
**au moyen du premier récepteur (41) ;**
• **recevoir les deuxièmes corrections** (32), et
• **déterminer les deuxièmes données corrigées (54),**
**au moyen du deuxième récepteur (51)** ;
- **l'étape (iii) comprend la sous-étape de requérir un arrêt du déplacement** du robot (1) via **l'unité d'entraînement moteur (12) lorsqu'une parmi les premières données corrigées (44) correspond à une sortie du robot (1) en dehors de la zone géographique (96') ;**
- **l'étape (iv) comprend** la **sous-étape de requérir une immobilisation du** robot (1) au moyen des **moyens d'immobilisation (7) lorsqu'une parmi les deuxièmes données corrigées (54) correspond à une entrée du robot** (1 ) dans la zone interdite (95).

## Patentansprüche

1. Mobiler Roboter (1), umfassend:
- eine Motorantriebseinheit (12);
- ein Navigationssystem (4), das an die Motorantriebseinheit (12) gekoppelt ist, um die Bewegung des Roboters (1) in einer geographischen Zone (96') zu kontrollieren;
**dadurch gekennzeichnet, dass** er weiter umfasst:
- ein Sicherheitssystem (5), umfassend:
- einen zweiten Empfänger (51) zum Empfangen zweiter Positionsdaten des Roboters (1),
- Feststellmittel (7) des Roboters (1), die imstande sind, den Roboter (1) unabhängig von der Kontrolle der Bewegung des Roboters (1) durch das Navigationssystem (4) festzustellen,
und an den zweiten Empfänger (51) gekoppelt sind, um auf Grundlage der zweiten Positionsdaten kontrolliert zu werden.

2. Roboter (1) nach dem vorstehenden Anspruch, umfassend eine Energiequelle (13) der Motorantriebseinheit (12), und **dadurch gekennzeichnet, dass** die Feststellmittel (7) einen Wechselschalter der Energiequelle (13) umfassen, um dieselbe auf Grundlage der zweiten Positionsdaten zu aktivieren und/oder deaktivieren.

3. Roboter (1) nach einem der vorstehenden Ansprüche, **dadurch gekennzeichnet, dass** das Navigationssystem (4) einen ersten Empfänger (41) umfasst, um erste Positionsdaten des Roboters (1) zu empfangen, wobei die Bewegungskontrolle des Roboters (1) auf Grundlage der ersten Positionsdaten erfolgt.

4. Roboter (1) nach Anspruch 1 oder 2,
wobei das Sicherheitssystem (5) einen ersten Empfänger (41) umfasst, um erste Positionsdaten des Roboters (1) zu empfangen, und
wobei das Navigationssystem (4) an den ersten Empfänger (41) gekoppelt ist, um die Bewegung des Roboters (1) in der geographischen Zone (96') auf Grundlage der ersten Positionsdaten zu kontrollieren.

5. Roboter (1) nach Anspruch 3 oder 4, wobei der erste (41) und zweite (51) Empfänger unabhängig sind, sodass die ersten und zweiten Positionsdaten eventuell voneinander abweichen.

6. Roboter (1) nach Anspruch 3 oder nach Anspruch 5, wenn von Anspruch 3 abhängig,
**dadurch gekennzeichnet, dass** der erste Empfänger (41) ein mobiler Empfänger eines ersten Satelliten-Positionierungssystems (GNSS) in Echtzeitkinematik (RTK) ist:
- konfiguriert, um erste RTK-Korrekturen (22) in Bezug auf die ersten Positionsdaten zu empfangen, und
- programmiert, um erste korrigierte Positionsdaten (44) aus den ersten Korrekturen (22) und den ersten Positionsdaten zu bestimmen,
wobei das Navigationssystem (4) programmiert ist, um die Bewegung des Roboters (1) in der geographischen Zone (96') auf Grundlage der ersten korrigierten Daten (44) zu kontrollieren.

7. Roboter (1) nach dem vorstehenden Anspruch, **dadurch gekennzeichnet, dass**:
- das Navigationssystem (4) einen ersten Datenträger umfasst, der mit dem ersten Empfänger (41) verbunden ist;
- erste Parameter (41P) zur Bewegungskontrolle des Roboters (1) am ersten Datenträger gespeichert sind;
- die ersten Parameter (41P) eine Definition der geographischen Zone (96') umfassen;
- der erste Empfänger (41) programmiert ist, um erste Vergleichsdaten (46) zwischen einerseits den ersten korrigierten Daten (44), und andererseits ersten Parametern (41 P), welche die geographische Zone (96') definieren, zu bestimmen; und
- das Navigationssystem (4) programmiert ist, um die Bewegung des Roboters (1) in der geographischen Zone (96') auf Grundlage der ersten Vergleichsdaten (46), anhand einer elektrischen und/oder elektromechanischen Kopplung mit der Motorantriebseinheit (12) zu kontrollieren.

8. Roboter (1) nach einem der vorstehenden Ansprüche
**dadurch gekennzeichnet, dass** der zweite Empfänger (51) ein mobiler Empfänger eines zweiten Satelliten-Positionierungssystems (GNSS) in Echtzeitkinematik (RTK) ist:
- konfiguriert, um zweite RTK-Korrekturen (32) in Bezug auf die zweiten Positionsdaten zu empfangen, und
- programmiert, um zweite korrigierte Positionsdaten (54) aus den zweiten Korrekturen (32) und den zweiten Positionsdaten zu bestimmen,
wobei das Sicherheitssystem (5) programmiert ist, um die Feststellmittel (7) des Roboters (1 ) auf Grundlage der zweiten korrigierten Daten (54) zu kontrollieren.

9. Roboter (1) nach dem vorstehenden Anspruch, **dadurch gekennzeichnet, dass**:
- die zweiten Korrekturen (32) Ende-zu-Ende verschlüsselt sind;
- ein Entschlüsselungsschlüssel (53) der zweiten Korrekturen (32) auf einem Datenträger des Sicherheitssystems (5) gespeichert ist, wobei dieser mit dem zweiten Empfänger (51) verbunden ist, um diesem die Daten zu übertragen; und
- der zweite Empfänger (51) programmiert ist, um die zweiten Korrekturen (32) anhand dieses Entschlüsselungsschlüssel (53) zu entschlüsseln, um entschlüsselte Korrekturen (52) zu bestimmen,
wobei die zweiten korrigierten Positionsdaten (54) wirksam durch den zweiten Empfänger (51) aus diesen entschlüsselten Korrekturen (52) und den zweiten Positionsdaten bestimmt werden.

10. Roboter (1) nach einem der Ansprüche 8 oder 9,
**dadurch gekennzeichnet, dass**:
- das Sicherheitssystem (5) einen zweiten Datenträger umfasst, der mit dem zweiten Empfänger (51) verbunden ist;
- zweite Parameter (51 P) zur Positionskontrolle des Roboters (1) am zweiten Datenträger gespeichert sind;
- der zweite Empfänger (51) programmiert ist, um Vergleichsdaten (55, 56) zwischen den zweiten korrigierten Daten (54) und den zweiten Parametern (51P) zu bestimmen; und
- das Sicherheitssystem (5) programmiert ist, um die Feststellmittel (7) des Roboters (1) auf Grundlage der Vergleichsdaten (55, 56) zu kontrollieren.

11. Roboter (1) nach dem vorstehenden Anspruch,
**dadurch gekennzeichnet, dass**:
- die zweiten Parameter (51 P) eine Definition einer Betriebszone (96) des Roboters (1) umfassen, welche mindestens die geographische Zone (96') umfasst, und die Vergleichsdaten (55, 56) zweite Vergleichsdaten (56) zwischen den zweiten korrigierten Daten (54) und den zweiten Parametern (51 P) umfassen, welche die Betriebszone (96) definieren; und/oder
- die zweiten Parameter (51 P) eine Definition einer verbotenen Zone (95) für den Roboter (1) umfassen, und die Vergleichsdaten (55, 56) dritte Vergleichsdaten (55) zwischen den zweiten korrigierten Daten (54) und den zweiten Parametern (51 P) umfassen, welche die verbotene Zone (95) definieren;
und dadurch, dass:
- die zweiten korrigierten Daten (54) eine Zeitkomponente umfassen; und
- die zweiten Parameter (51 P), welche die Betriebs- (96) und/oder verbotene (95) Zone definieren, von dieser Zeitkomponente abhängig sind.

12. Roboter (1) nach Anspruch 10 oder 11, **dadurch gekennzeichnet, dass** das Sicherheitssystem (5) eine physische Zugangssteuerung umfasst, um die zweiten Parameter (51P) zu ändern, wobei selbige nur anhand dieser physischen Zugangssteuerung änderbar sind.

13. Roboter (1) nach einem der vorstehenden Ansprüche, **dadurch gekennzeichnet, dass** er aus einem Mähroboter besteht.

14. Verwendung eines mobilen Roboters (1) nach einem der vorstehenden Ansprüche in der Umgebung einer Flughafenlandebahn.

15. Verfahren zum räumlichen Begrenzen einer Bewegung
eines mobilen Roboters (1), umfassend:
- eine Motorantriebseinheit (12),
- ein Navigationssystem (4), das an die Motorantriebseinheit (12) gekoppelt ist, um die Bewegung des Roboters (1) in einer geographischen Zone (96') zu kontrollieren;
wobei das Verfahren die Schritte umfasst zum:
(i) Bereitstellen und Versehen des Roboters (1) mit einem Sicherheitssystem (5), umfassend:
- einen zweiten Empfänger (51) zum Empfangen zweiter Positionsdaten des Roboters (1),
- Feststellmittel (7) des Roboters (1), die imstande sind, den Roboter (1) unabhängig von der Kontrolle der Bewegung des Roboters (1) durch das Navigationssystem (4) festzustellen,
und an den zweiten Empfänger (51) gekoppelt sind, um auf Grundlage der zweiten Positionsdaten kontrolliert zu werden;
(ii) Empfangen der zweiten Positionsdaten anhand des zweiten Empfängers (51);
(iii) Kontrollieren der Bewegung des Roboters (1) in der geographischen Zone (96') anhand des Navigationssystems (4);
(iv) Kontrollieren der Feststellmittel (7) des Roboters (1) auf Grundlage der zweiten Positionsdaten, die von dem zweiten Empfänger (51) empfangen werden.

16. Verfahren nach dem vorstehenden Anspruch, zum Begrenzen in der geographischen Zone (96') und außerhalb einer verbotenen Zone (95) der Bewegung des mobilen Roboters (1), wobei letzterer dergestalt ist, dass:
das Navigationssystem (4) einen ersten mobilen Empfänger (41) eines ersten Satelliten-Positionierungssystems (GNSS) in Echtzeitkinematik (RTK) umfasst:
- konfiguriert, um erste Positionsdaten des Roboters (1) und erste RTK-Korrekturen (22) in Bezug auf die ersten Positionsdaten zu empfangen, und
- programmiert, um erste korrigierte Positionsdaten (44) aus den ersten Korrekturen (22) und den ersten Positionsdaten zu bestimmen,
wobei das Navigationssystem (4) programmiert ist, um die Bewegung des Roboters (1) in der geographischen Zone (96') auf Grundlage der ersten korrigierten Daten (44) zu kontrollieren;
wobei das Verfahren **dadurch gekennzeichnet ist, dass**:
- der zweite Empfänger (51) des im Schritt (i) bereitgestellten Sicherheitssystems (5) ein mobiler Empfänger eines zweiten Satelliten-Positionierungssystems (GNSS) in Echtzeitkinematik (RTK) ist:
- konfiguriert, um zweite RTK-Korrekturen (32) in Bezug auf die zweiten Positionsdaten zu empfangen, und
- programmiert, um zweite korrigierte Positionsdaten (54) aus den zweiten Korrekturen (32) und den zweiten Positionsdaten zu bestimmen;
- der Schritt (ii) die Teilschritte umfasst:
- Empfangen der ersten Positionsdaten,
- Empfangen der ersten Korrekturen (22), und
- Bestimmen der ersten korrigierten Daten (44),
anhand des ersten Empfängers (41);
- Empfangen der zweiten Korrekturen (32), und
- Bestimmen der zweiten korrigierten Daten (54),
anhand des zweiten Empfängers (51);
- der Schritt (iii) den Teilschritt des Anforderns eines Stopps der Bewegung des Roboters (1) über die Motorantriebseinheit (12) umfasst, wenn eines aus den ersten korrigierten Daten (44) einem Austritt des Roboters (1) aus der geographischen Zone (96') entspricht;
- der Schritt (iv) einen Teilschritt des Anforderns einer Feststellung des Roboters (1) anhand der Feststellmittel (7) umfasst, wenn eines aus den zweiten korrigierten Daten (54) einem Eintritt des Roboters (1) in die verbotene Zone (95) entspricht.

## Claims

1. A mobile robot (1) comprising:
- a motor drive unit (12);
- a navigation system (4) coupled to the motor drive unit (12) for controlling a movement of the robot (1) in a geographical area (96');
**characterised in that** it further comprises:
- a safety system (5) comprising:
∘ a second receiver (51) for receiving second position data from the robot (1),
∘ means (7) for immobilising the robot (1), capable of immobilising the robot (1) independently of the control of the movement of the robot (1) by the navigation system (4),
and coupled to the second receiver (51) to be controlled on the basis of the second position data.

2. The robot (1) according to the preceding claim,
comprising an energy source (13) of the motor drive unit (12), and **characterised in that** the immobilisation means (7) comprise a switch of the energy source (13) for activating and/or deactivating the same on the basis of the second position data.

3. The robot (1) according to any one of the preceding claims,
**characterised in that** the navigation system (4) comprises a first receiver (41) for receiving first position data from the robot (1), the movement of the robot (1) being controlled on the basis of the first position data.

4. The robot (1) according to claim 1 or 2,
wherein the safety system (5) comprises a first receiver (41) for receiving first position data from the robot (1), and wherein the navigation system (4) is coupled to the first receiver (41) for controlling the movement of the robot (1) in the geographical area (96') on the basis of the first position data.

5. The robot (1) according to claim 3 or 4, wherein the first (41) and second (51) receivers are independent, so that the first and second position data may differ.

6. The robot (1) according to claim 3 or according to claim 5 when dependent on claim 3,
**characterised in that** the first receiver (41) is a mobile receiver of a first real-time kinematic (RTK) satellite positioning system (GNSS):
- configured to receive first RTK corrections (22) relating to the first position data, and
- programmed to determine first corrected position data (44) from the first corrections (22) and from the first position data,
the navigation system (4) being programmed to control the movement of the robot (1) in the geographical area (96') on the basis of the first corrected data (44).

7. The robot (1) according to the preceding claim, **characterised in that**:
- the navigation system (4) comprises a first data support connected to the first receiver (41);
- first parameters (41 P) for controlling the movement of the robot (1) are recorded on the first data support;
- the first parameters (41 P) comprise a definition of the geographical area (96');
- the first receiver (41) is programmed to determine first comparison data (46) between, on the one hand, the first corrected data (44) and, on the other hand, first parameters (41 P) defining the geographical area (96'); and
- the navigation system (4) is programmed to control the movement of the robot (1) in the geographical area (96') on the basis of the first comparison data (46), by means of an electrical and/or electromechanical coupling with the motor drive unit (12).

8. The robot (1) according to any one of the preceding claims,
**characterised in that** the second receiver (51) is a mobile receiver of a second real-time kinematic (RTK) satellite positioning system (GNSS):
- configured to receive second RTK corrections (32) relating to the second position data, and
- programmed to determine second corrected position data (54) from the second corrections (32) and the second position data,
the safety system (5) being programmed to control the means (7) for immobilising the robot (1) on the basis of the corrected second data (54).

9. The robot (1) according to the preceding claim, **characterised in that**:
- the second corrections (32) are end-to-end encrypted;
- a decryption key (53) for the second corrections (32) is stored on a data support of the safety system (5), which is connected to the second receiver (51) to transmit data to it; and
- the second receiver (51) is programmed to decrypt the second corrections (32) using this decryption key (53) so as to determine decrypted corrections (52),
the second corrected position data (54) being effectively determined by the second receiver (51) from these decrypted corrections (52) and the second position data.

10. The robot (1) according to any one of claims 8 or 9, **characterised in that**:
- the safety system (5) comprises a second data support connected to the second receiver (51);
- second parameters (51P) for controlling the position of the robot (1) are recorded on the second data support;
- the second receiver (51) is programmed to determine comparison data (55, 56) between the corrected second data (54) and second parameters (51P); and
- the safety system (5) is programmed to control the means (7) for immobilising the robot (1) on the basis of the comparison data (55, 56).

11. The robot (1) according to the preceding claim, **characterised in that**:
- the second parameters (51P) comprise a definition of an operating area (96) for the robot (1) comprising at least the geographical area (96'), and said comparison data (55, 56) comprises second comparison data (56) between the corrected second data (54) and second parameters (51P) which define the operating area (96); and/or
- the second parameters (51P) comprise a definition of a prohibited area (95) for the robot (1), and said comparison data (55, 56) comprise third comparison data (55) between the corrected second data (54) and second parameters (51P) which define the prohibited area (95);
and **in that**:
- the second corrected data (54) comprises a time component; and
- the second parameters (51P) defining the operating (96) and/or forbidden (95) areas depend on this time component.

12. The robot (1) according to claim 10 or 11, **characterised in that** the safety system (5) comprises a physical access control for modifying the second parameters (51 P), these being modifiable only by means of this physical access control.

13. The robot (1) according to any one of the preceding claims, **characterised in that** it consists of a robotic lawnmower.

14. A use of a mobile robot (1) according to any of the preceding claims in the vicinity of an airport runway.

15. A method for spatially limiting a movement
of a mobile robot (1), comprising:
- a motor drive unit (12),
- a navigation system (4) coupled to the motor drive unit (12) for controlling a movement of the robot (1) in a geographical area (96');
the method comprising the steps of:
(i) providing and equipping the robot (1) with a safety system (5) comprising:
- a second receiver (51) for receiving second position data from the robot (1),
- means (7) for immobilising the robot (1), capable of immobilising the robot (1) independently of the control of the movement of the robot (1) by the navigation system (4),
and coupled to the second receiver (51) to be controlled on the basis of the second position data;
(ii) receiving second position data by means of the second receiver (51);
(iii) controlling the movement of the robot (1) in the geographical area (96') by means of the navigation system (4);
(iv) controlling the means (7) for immobilising the robot (1) on the basis of the second position data received by the second receiver (51).

16. The method according to the preceding claim, for limiting, in said geographical area (96') and outside a prohibited area (95), the movement of the mobile robot (1), the latter being such that:
the navigation system (4) comprises a first mobile receiver (41) for a first real-time kinematic (RTK) satellite positioning system (GNSS):
- configured to receive first position data from the robot (1) and first RTK corrections (22) relating to the first position data, and
- programmed to determine first corrected position data (44) from the first corrections (22) and from the first position data,
the navigation system (4) being programmed to control the movement of the robot (1) in the geographical area (96') on the basis of the first corrected data (44);
the method being **characterised in that**:
- the second receiver (51) of the safety system (5) supplied in step (i) is a mobile receiver of a second real-time kinematic (RTK) satellite positioning system (GNSS):
∘ configured to receive second RTK corrections (32) relating to the second position data, and
∘ programmed to determine second corrected position data (54) from the second corrections (32) and the second position data;
- step (ii) comprises the sub-steps:
∘ receiving the first position data,
∘ receiving the first corrections (22), and
∘ determining the first corrected data (44),
by means of the first receiver (41);
∘ receiving the second corrections (32), and
∘ determining the second corrected data (54),
by means of the second receiver (51);
- step (iii) comprises the sub-step of requesting a stop of the movement of the robot (1) via the motor drive unit (12) when one of the first corrected data (44) corresponds to an exit of the robot (1) outside the geographical area (96');
- step (iv) comprises the sub-step of requesting an immobilisation of the robot (1) by means of immobilisation means (7) when one of the second corrected data (54) corresponds to the robot (1) entering the prohibited area (95).
